# EUROPEAN PATENT SPECIFICATION

(11) **EP 1 207 171 B1**
(45) Date of publication and mention of the grant of the patent: **28.01.2004**
(21) Application number: 01307727.6
(22) Date of filing: 11.09.2001
(51) Int. Cl.: C08F 255/02, C08F 255/10

(54) **Graft polyolefin and resin coating composition containing the same**
Gepfropftes Polyolefin und deren Harzzusammensetzung
Une polyolefine greffée et composition de resine la contenant

(30) Priority: 14.11.2000 JP 2000346812; 09.08.2001 JP 2001242096
(43) Date of publication of application: 22.05.2002
(73) Proprietor: Toyo Kasei Kogyo Company Limited, Osaka-shi, Osaka-fu (JP)
(72) Inventor: Masuda, Takafumi, c/o Toyo Kasei Kogyo, Takasago-shi, Hyogo (JP); Tokimoto, Shingo, c/o Toyo Kasei Kogyo, Takasago-shi, Hyogo (JP); Maekawa, Shoji, c/o Toyo Kasei Kogyo, Takasago-shi, Hyogo (JP)
(74) Representative: Wilkinson, Stephen John

(56) References cited:
- EP-A- 0 770 641

## Description

### FIELD OF THE INVENTION

The present invention relates to a resin coating composition which shows an improved adhesion property when used for surface coating of a molded article made of a polyolefin resin such as polypropylene or used for adhesion between a polyolefin resin substrate and another substrate made of aluminum, a synthetic resin, etc., and also relates to a graft polyolefin used for the resin coating composition.

### PRIOR ART

Polyolefin resins such as polypropylene are praised for their excellent properties and inexpensiveness, and frequently utilized as a molding material. However, polyolefin resins lack compatibility with other resins, because they are crystalline and, unlike polar resins such as polyurethane resins, polyamide resins, acrylic resins and polyester resins, they have no polarity. As a result, when polyolefin resins are no polarity. As a result, when polyolefin resins are used for molded articles such as automobile parts, electric parts, daily commodities and industrial materials, it is difficult to apply surface coating or to effect adhesion to another substrate.

Various measures have been taken to solve these problems. First of all, there is a method for improving the adhesion property to the surface of a molded article made of a polyolefin resin composition, comprising the step of activating its surface by plasma treatment or flame treatment. Nevertheless, this method complicates the production process, and eventually requires a huge cost for facilities and an extra production time. Further, being susceptible to the shape of molded articles or to additives such as pigments contained in the resin composition, this method may fail to give stable surface treatment effects.

Instead of the above pretreatment, there are some suggestions for coating a primer composition, as embodied in the coating on an automobile bumper made of a polypropylene (e.g. Japanese Patent Publication No. H6-2771) . In general, such primer composition is mainly composed of a chlorinated polyolefin resin which is obtained by modifying a polyolefin resin with an unsaturated carboxylic acid and/or an acid anhydride thereof and chlorinating the modified polyolefin resin (e.g. Japanese Patent Publication No. H1-16414). In addition, Japanese Patent Publication No. H3-60872 proposes a composition in which a mixture of a chlorinated polypropylene and a liquid rubber is graft-polymerized with an acrylic monomer. It is confirmed that the resulting graft polymer serves as a binder which adheres to both a polyolefin resin and a polar resin.

Although these chlorinated polyolefin resin compositions exhibit an excellent adhesion property, they are unsatisfactory in terms of weatherability and heat resistance. For example, under high temperatures (over 150°C), hydrogen chloride may be eliminated in a short time, thereby to cause coloration or cracks in the coating.

Alternatively, Japanese Patent Laid-open Publication No. H7-330823 discloses a non-chlorinated polyolefin resin composition. However, if the resin component consists only of a crystalline polymer, the composition partially crystallizes or gelates at a room temperature. Thus, this composition, which loses fluidity while stored at low temperatures, is difficult to handle.

In order to tackle these drawbacks, investigations have been made for a resin coating composition comprising an amorphous non-chlorinated polyolefin. To give an example, a proposed one-coat paint composition comprises a polyolefin resin which is simply modified with maleic acid. In fact, this one-coat paint composition shows a certain degree of adhesion property and solvent resistance. Nevertheless, its compatibility with acrylic resins or alkyd resins is so poor as to degrade glossiness of the coating, which leads to serious deterioration of the appearance.

### SUMMARY OF THE INVENTION

For the purpose of solving the problems concerning conventional polyolefin resin coating compositions, the present invention intends to provide a resin coating composition which is improved in adhesion property to the surface of a molded article made of a polyolefin resin and the like, and which is excellent in solution stability, compatibility with paints, weatherability and heat resistance. The present invention also intends to provide a graft polyolefin used for the resin coating composition.

The present invention has been completed through intensive researches aimed to achieve the above object. Specifically, the present invention provides the following:
(1) A graft polyolefin which is obtained by a method comprising the steps of:
   (a) dissolving or dispersing, in an organic solvent, an acid anhydride-modified amorphous polyolefin which comprises propylene and butene as polymerizable components, thereby preparing its solution or dispersion;
   (b) adding a hydroxyl group-containing radical polymerizable monomer to the solution or dispersion, and allowing the acid anhydride-modified polyolefin to react with the hydroxyl group-containing radical polymerizable monomer; and
   (c) effecting graft polymerization by adding at least one radical polymerizable monomer and a radical initiator.
(2) The graft polyolefin according to (1), wherein the acid anhydride in the acid anhydride-modified polyolefin is maleic anhydride and/or itaconic anhydride.
(3) The graft polyolefin according to (1), wherein the acid anhydride-modified polyolefin comprises the acid anhydride in a proportion of 0.1 to 10% by weight.
(4) The graft polyolefin according to (1), wherein the organic solvent is at least one member selected from the group consisting of aromatic hydrocarbons, alicyclic hydrocarbons, glycols and esters.
(5) The graft polyolefin according to (1), wherein the solution or dispersion comprises the acid anhydride-modified polyolefin in a proportion of 10 to 60% by weight as a solid content.
(6) The graft polyolefin according to (1), wherein, in the step (b) , the hydroxyl group-containing radical polymerizable monomer is added in a molar ratio of 0.5 to 2 relative to the acid anhydride in the acid anhydride-modified polyolefin.
(7) The graft polyolefin according to (1), wherein the hydroxyl group-containing radical polymerizable monomer is at least one member selected from the group consisting of 2-hydroxyethyl (meth)acrylate and polypropylene glycol (meth)acrylate.
(8) The graft polyolefin according to (1), wherein the step (b) further comprises the step of heating the solution or dispersion of the acid anhydride-modified polyolefin to 110°C or higher and keeping the temperature for not less than 30 minutes, before the addition of the hydroxyl group-containing radical polymerizable monomer.
(9) The graft polyolefin according to (1), wherein the radical polymerizable monomer comprises 2-ethylhexyl (meth)acrylate in a proportion of 10 to 90% by weight.
(10) The graft polyolefin according to (1), wherein the radical polymerizable monomer is added in a weight ratio of 15/85 to 85/15 relative to the acid anhydride-modified polyolefin.
(11) The graft polyolefin according to (1), wherein the radical initiator is at least one member selected from the group consisting of organic peroxides and azo compounds.
(12) The graft polyolefin according to (1), wherein the radical polymerizable monomer and the radical initiator are added dropwise.
(13) A resin coating composition which comprises the graft polyolefin according to any of (1) to (12) in a proportion of 10 to 60% by weight as a solid content.

### DETAILED DESCRIPTION OF THE INVENTION

The present invention is hereinafter described in detail. The graft polyolefin of the present invention is obtained by Steps (a) to (c) below.

### Step (a)

In Step (a), use is made of an amorphous polyolefin modified with an acid anhydride, which may be hereinafter called an acid anhydride-modified polyolefin. In the context of the present invention, an amorphous polyolefin means a polyolefin which is amorphous. The term "amorphous" is understood to indicate the state where no heat of fusion deriving from crystals is detected by a thermal analysis using a differential scanning calorimeter (DSC).

The polyolefin should comprise propylene and butene as the polymerizable components. As the butene, 1-butene and 2-butene can be used alone or together.

Regarding the contents of propylene and butene in the polyolefin, the propylene content is preferably in the range of 50 to 80% by weight, particularly 60 to 70% by weight (the butene content is preferably in the range of 20 to 50% by weight, particularly 30 to 40% by weight). If the propylene content is less than 50% by weight, the final graft polyolefin may show a limited adhesion property to the polypropylene substrate. On the contrary, with a propylene content over 80% by weight, the final graft polyolefin may show poor solubility in an organic solvent, and, as a result, the solution stability of the resin coating composition containing this graft polyolefin is decreased.

The weight average molecular weight of the amorphous polyolefin is preferably in the range of 10,000 to 200,000, particularly 20,000 to 100,000, from the viewpoint of workability.

The amorphous polyolefin is modified with an acid anhydride. The acid anhydride used in the present invention is not specifically limited, as far as having a polymerizable double bond. As such, there may be mentioned α, β-unsaturated carboxylic anhydrides such as maleic anhydride, itaconic anhydride and citraconic anhydride, which may be used alone or in combination. Among them, maleic anhydride and itaconic anhydride are desirable for their versatility.

The acid anhydride-modified polyolefin preferably contains an acid anhydride in the proportion of 0.1 to 10% by weight, particularly 1.0 to 5.0% by weight. If the acid anhydride content is less than 0.1% by weight, the final graft polyolefin may show poor solubility in an organic solvent, and, as a result, the solution stability of the resin coating composition containing this graft polyolefin is decreased. On the other hand, if the acid anhydride content exceeds 10% by weight, the final graft polyolefin may show a limited adhesion property to the polypropylene substrate.

Incidentally, the polyolefin can be modified with an acid anhydride in a molten or dissolved state, as practiced in known methods.

As described above, where the amorphous polyolefin is modified with an acid anhydride, the final graft polyolefin enjoys an improved solubility in an organic solvent. In consequence, the resin coating composition containing this graft polyolefin is endowed with good solution stability, and allowed to contain a greater amount of graft polyolefin.

The acid anhydride-modified polyolefin is dissolved or dispersed in an organic solvent. The organic solvents to be used in the present invention include, but not particularly limited to, aromatic hydrocarbons such as benzene, toluene and xylene; alicyclic hydrocarbons such as cyclohexane and methyl cyclohexane; ketones such as methyl ethyl ketone and methyl isobutyl ketone; esters such as ethyl acetate, propyl acetate and butyl acetate; heterocyclic hydrocarbons such as tetrahydrofuran; glycols such as propylene glycol; etc. These solvents may be used alone or in combination. Among them, suitable solvents are xylene and butyl acetate.

In this solution or dispersion, the solid content of the acid anhydride-modified polyolefin is preferably in the range of 10 to 60% by weight, particularly 20 to 50% by weight. The solution or dispersion with a solid content below 10% by weight is not practical, whereas the solution or dispersion with a solid content over 60% by weight may have an excessive viscosity which restricts the reactivity.

### Step (b)

Step (b) comprises adding a hydroxyl group-containing radical polymerizable monomer to the solution or dispersion of the acid anhydride-modified polyolefin, and allowing the acid anhydride group in the acid anhydride-modified polyolefin to react with the hydroxyl group in the hydroxyl group-containing radical polymerizable monomer.

As the hydroxyl group-containing radical polymerizable monomers used in the present invention, there may be mentioned, without limitation, 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, polypropylene glycol acrylate, polypropylene glycol methacrylate and the like. These monomers may be used alone or in combination. Above all, it is advantageous to use 2-hydroxyethyl acrylate, 2-hydroxyethyl methacrylate, polypropylene glycol acrylate and polypropylene glycol methacrylate.

The hydroxyl group-containing radical polymerizable monomer is added preferably in a molar ratio of 0.5 to 2 relative to the acid anhydride in the acid anhydride-modified polyolefin. If the molar ratio is below 0.5, the reaction with the hydroxyl group-containing radical polymerizable monomer cannot give the expected effect. On the contrary, if the molar ratio is over 2, the mixture may gelate during the reaction.

The reaction of the acid anhydride-modified polyolefin with the hydroxyl group-containing radical polymerizable monomer is effective in order to graft-polymerize the below-mentioned radical polymerizable monomer to the acid anhydride-modified polyolefin sufficiently. Besides, this reaction improves the solubility of the final graft polyolefin in the organic solvent, and, therefore, enhances the solution stability of the resin coating composition containing this graft polyolefin.

Before the addition of the hydroxyl group-containing radical polymerizable monomer, the present invention further includes, preferably, a step of heating the solution or dispersion of the acid anhydride-modified polyolefin to 110°C or higher, and keeping the temperature for not less than 30 minutes. This step allows the acid anhydride-modified polyolefin to turn its ring-opening carboxyl group into ring-closed acid anhydride group, so that the ring-closed acid anhydride group can react with the hydroxyl group in the hydroxyl group-containing radical polymerizable monomer. This step is desired, considering the fact that the acid anhydride group in the acid anhydride-modified polyolefin gradually opens the ring, under the influence of moisture, water, etc., to become carboxyl group. As for the reaction conditions, it is not very efficient to heat the solution or dispersion of the acid anhydride-modified polyolefin at a temperature lower than 110°C, because the carboxyl group takes a long time to close the ring. Besides, the heating time shorter than 30 minutes is undesirable, because the carboxyl group may not close the ring completely.

### Step (c)

In Step (c), which follows the reaction of the acid anhydride-modified polyolefin with the hydroxyl group-containing radical polymerizable monomer, at least one radical polymerizable monomer and a radical initiator are added to effect graft polymerization, and, thereby, a graft polyolefin is obtained.

The radical polymerizable monomers used in the present invention include, but not particularly limited to, unsaturated monocarboxylic acids and their esters, unsaturated dicarboxylic acids, their esters and their acid anhydrides, unsaturated aromatic monomers, and other radical polymerizable monomers. In particular, it is advantageous to use unsaturated monocarboxylic acids and their esters.

Examples of the unsaturated monocarboxylic acids include acrylic acid and methacrylic acid. Examples of the unsaturated monocarboxylic acid esters are acrylates or methacrylates having 1 to 20 (preferably 1 to 13) carbon atoms. Specific examples include acrylates such as methyl acrylate, ethyl acrylate, propyl acrylate, n-butyl acrylate, isobutyl acrylate, t-butyl acrylate, 2-ethylhexyl acrylate, lauryl acrylate, stearyl acrylate, 2-hydroxyethyl acrylate, 2-hydroxypropyl acrylate and cyclohexyl acrylate; methacrylates such as methyl methacrylate, ethyl methacrylate, propyl methacrylate, n-butyl methacrylate, isobutyl methacrylate, t-butyl methacrylate, 2-ethylhexyl methacrylate, lauryl methacrylate, stearyl methacrylate, 2-hydroxyethyl methacrylate, 2-hydroxypropyl methacrylate and cyclohexyl methacrylate.

Preferably, the weight ratio of the added radical polymerizable monomers relative to the acid anhydride-modified polyolefin is 15/85 to 85/15 (radical polymerizable If the added amount anhydride-modified polyolefin). If the added amount is below this range, the final graft polyolefin may be less compatible with polar paints such as polyurethane paints and polyester paints. On the contrary, when the added amount exceeds this range, the final graft polyolefin may show a limited adhesion property to the polypropylene substrate. It should be understood that the amount of added radical polymerizable monomer includes that of hydroxyl group-containing radical polymerizable monomer which is added in Step (b).

In the present invention, the radical polymerizable monomers may be used alone or in combination. It is favorable to employ 2-ethylhexyl (meth)acrylate in combination with other radical polymerizable monomers. In this case, the content of 2-ethylhexyl (meth) acrylate is preferably in the range of 10 to 90% by weight, particularly 15 to 85% by weight, in the entire radical polymerizable monomers employed. Where the 2-ethylhexyl (meth)acrylate content is less than 10% by weight, the final graft polyolefin may show poor solubility in an organic solvent, and, as a result, the solution stability of the resin coating composition containing this graft polyolefin is decreased. On the other hand, where the 2-ethylhexyl (meth)acrylate content is more than 90% by weight, the final graft polyolefin may be less compatible with polar paints such as polyurethane paints, so that the coating properties are deteriorated.

The radical initiator to be added together with the radical polymerizable monomer includes, but not particularly limited to, organic peroxides such as benzoyl peroxide, t-butyl peroxy-2-ethylhexanoate and t-butyl peroxyisopropylmonocarbonate; and azo compounds such as 2,2-azobis(isobutyronitrile). They may be used alone or in combination. In addition, the radical polymerizable monomer and the radical initiator are preferably added dropwise.

The graft polyolefin in the form of solution or dispersion can serve as a resin coating composition, without the need of isolation. In the resin coating composition, the solid content of the graft polyolefin is preferably 10 to 60% by weight, particularly 20 to 50% by weight. A solid content below 10% by weight is not practical, whereas a solid content over 60% by weight may result in an excessive viscosity and limit the workability.

The resin coating composition may contain a pigment in dispersed form. As the pigments, there may be used inorganic pigments such as carbon black, titanium dioxide, talc, zinc oxide and aluminum paste; and organic pigments such as azo pigments and benzoyl pigments. In addition, it is possible to blend dispersants for pigments; UV absorbers; and resins for paint such as acrylic polyol resins, alkyd resins and polyester polyol resins.

The thus obtained resin coating composition does not experience gelation or phase separation, which means that the resulting composition ensures good solution stability. Therefore, when cast onto a molded article such as film, the resin coating composition can form a uniform and transparent coating. Secondly, the graft polyolefin of the present invention has a good adhesion property to a polypropylene substrate, so that the coating formed of the graft polyolefin-containing resin coating composition can show an improved adhesion propertytoa polyolefinsubstrate. Thirdly, the graft polyolefin of the present invention shows a good compatibility with polar paints such as polyurethane paints and polyester paints. As a result, the coating formed of the graft polyolefin-containing resin coating composition can show an improved adhesion property to a polar-paint coating formed thereon, and a one-coat paint which comprises a blend of the resin coating composition and a paint can provide a coating with appealing surface glossiness.

### EXAMPLES

The following description is directed to the examples of the graft polyolefin and the resin coating composition containing this graft polyolefin according to the present invention. However, the present invention should not be limited to these examples.

### EXAMPLE 1

In a 1000-ml autoclave, 200 parts by weight of amorphous propylene-butene copolymer (propylene: 70% by weight, 1-butene: 30% by weight, weight average molecular weight: 30, 000) were dissolved in 500 parts by weight of mixed solvent comprising refined toluene and acetone (acetone: 5% by weight). Then, 50 parts by weight of industrial maleic anhydride were added and dissolved under heating at 140°C for one hour. Further added were 5 parts by weight of industrial di-t-butyl peroxide. The mixture was stirred at the above-prescribed temperature for five hours, and later cooled to the room temperature. As a reprecipitant, 3,000 parts by weight of acetone were added to the thus obtained resin solution. The resin precipitate was collected by suction filtration and dried to give an amorphous propylene-butene copolymer modified with maleic anhydride (acid anhydride-modified polyolefin). In this acid anhydride-modified polyolefin, the maleic anhydride content was 1.5% by weight.

Next, inside a four-neck flask equipped with a stirrer, a condenser, a thermometer and a dropping funnel, 15 parts by weight of the acid anhydride-modified polyolefin were dissolved in 200 parts by weight of xylene and heated at 120°C for 30 minutes. Later, with the temperature lowered to 100°C, one part of 2-hydroxyethyl acrylate was added to allow the acid anhydride group in the acid anhydride-modified polyolefin to react with the hydroxyl group in the 2-hydroxyethyl acrylate. To this reaction mixture, a solution prepared by thoroughly mixing 15 parts by weight of 2-ethylhexyl methacrylate, 30 parts by weight of isobutyl methacrylate, 30 parts by weight of methyl methacrylate, 5 parts by weight of methacrylic acid, 4 parts by weight of 2-hydroxyethyl methacrylate and 1 part by weight of t-butyl peroxy-2-ethylhexanoate was added dropwise over a period of three hours. The reaction was continued for five hours under sufficient stirring. Thereafter, the reaction mixture was cooled to give a resin coating composition.

In the resulting resin coating composition, the resin content was 33% by weight, and the solution viscosity was 30 mPa·s (at 25°C). The resin had a weight average molecular weight of 60,000.

### EXAMPLES 2 to 5

Resin coating compositions were obtained using the same acid anhydride-modified polyolefin obtained in EXAMPLE 1. The reactions were performed in a manner similar to EXAMPLE 1, based on the recipe given in Table 1.

### COMPARATIVE EXAMPLES 1 & 2

Resin coating compositions were obtained by similar reactions to EXAMPLE 1, except that 2-hydroxyethyl acrylate was not allowed to react with the acid anhydride-modified polyolefin prior to the graft polymerization, but blended with other acrylic components listed in Table 1 to effect graft polymerization.

**Table I**

| RECIPE | EXAMPLES | | | | | COMP. EXAMPLES | |
|---|---|---|---|---|---|---|---|
| | 1 | 2 | 3 | 4 | 5 | 1 | 2 |
| Acid anhydride-modified polyolefin | 15 | 30 | 50 | 76 | 50 | 30 | 50 |
| Xylene | 200 | 200 | 200 | 200 | - | 200 | 200 |
| Butyl acetate | - | - | - | - | 200 | - | - |
| 2-hydroxyethyl acrylate | 1 | 2 | 2 | 3 | 2 | 2 | 2 |
| Reaction with hydroxyl group-containing radical polymerizable monomer (Step (b)) | performed | | | | | omitted | |
| 2-ethylhexyl methacrylate | 15 | 12 | 30 | 14 | 30 | 12 | 30 |
| Isobutyl methacrylate | 30 | 24 | 14 | 4.3 | 14 | 24 | 14 |
| Methyl methacrylate | 30 | 21 | 3 | 4.3 | 3 | 21 | 3 |
| Methacrylic acid | 5 | 4 | 0.9 | 0.5 | 0.9 | 4 | 0.9 |
| 2-hydroxyethyl methacrylate | 4 | 7 | 0.9 | 0.5 | 0.9 | 7 | 0.9 |
| Ratio of acrylic components/ acid anhydride-modified polyolefin (by weight) | 85/15 | 70/30 | 50/50 | 24/76 | 50/50 | 70/30 | 50/50 |
| 2-ethylhexyl methacrylate content in acrylic components (weight %) | 17.6 | 14.1 | 60 | 58.3 | 60 | 14.1 | 60 |
| Solid content of graft polyolefin in the composition (weight %) | 33 | 33 | 33 | 33 | 33 | 33 | 33 |
| Transparency of the coating | good | good | good | good | good | bad | bad |
| Solution stability | good | good | good | good | good | bad | bad |

Samples from the resin coating compositions obtained in EXAMPLES 1 to 5 and COMPARATIVE EXAMPLES 1 and 2 were evaluated for solution stability and transparency of the coating. The results were given in Table 1.

### [Evaluation Methods]

### 1. Transparency of the coating

Each sample was applied on a glass plate using a 50-micron applicator and dried for 30 minutes at 80°C. Then, the transparency of the coating was judged by the following two grades.
- good:: The coating was transparent.
- bad:: The coating separated into two phases.

### 2. Solution stability

After each sample was left at a room temperature (25°C) for one month, the state of the solution was evaluated by the following two grades.
- good:: The solution showed no separation, showing fluidity at a room temperature.
- bad:: The solution separated into two phases, showing no fluidity at a room temperature.

According to Table 1, it is confirmed that the samples of EXAMPLES 1 to 5 (the present invention) were good in both transparency of the coating and solution stability, while the samples of COMPARATIVE EXAMPLES 1 and 2 were not.

Further, samples from the resin coating compositions obtained in EXAMPLES 1 to 5 and the resin coating composition of REFERENCE EXAMPLE 1 (described below) were evaluated for adhesion property, gasoline resistance, hot water resistance and heat resistance. The results were compiled in Table 2.

### REFERENCE EXAMPLE 1

As the resin coating composition, there was used HARDLEN CY-9124 (manufactured by Toyo Kasei Kogyo Co., Ltd.), which is a 20% toluene solution of acid anhydride-modified chlorinated polypropylene (HARDLEN CY-9124P, chlorine content: 24%).

**Table 2**

| EVALUATION ITEMS | EXAMPLES | | | | | REF. EX. |
|---|---|---|---|---|---|---|
| | 1 | 2 | 3 | 4 | 5 | 1 |
| Adhesion property | good | good | good | good | good | good |
| Gasoline resistance | good | good | good | good | good | good |
| Hot water resistance | good | good | good | good | good | good |
| Heat resistance | 60 minutes or longer | | | | | 5 mins. |

### Manufacture of coated plate

Each resin coating composition of EXAMPLES 1 to 5 and REFERENCE EXAMPLE 1, prepared in a resin content of 12% by weight, was coated onto a PP/EPDM plate. Further on this plate, an acrylic urethane base paint and an acrylic urethane clear paint were applied successively, and the plate was baked at 80°C for 30 minutes. The baked plate was kept at a room temperature for one week, and then assessed for adhesion property, gasoline resistance and hot water resistance in the manners mentioned below. As for heat resistance, the resin in the resin coating composition was evaluated in the following manner.

### [Evaluation Method]

### 1. Adhesion property

The coated surface was scored into 100 grids, with each cut being 1 mm apart from the others and reaching the plate. A piece of cellophane tape was adhered to the scored surface and then peeled off in 90° direction (according to JIS K 5400). Based on the count of grids in which the coating remained unpeeled, the adhesion property was evaluated by the following three grades.
- good:: No peeling was observed.
- fair:: The peeled area accounted for less than 15% of the entire coating.
- bad:: The peeled area accounted for 15% or more of the entire coating.

### 2. Gasoline resistance

The coated plate whose edge was cut at 45° was immersed in regular gasoline at 20°C. According to the time when the coating started to peel at the edge, the gasoline resistance was evaluated by the following three grades.
- good:: Two hours or over.
- fair:: One hour or over, but less than two hours.
- bad:: Less than one hour.

### 3. Hot water resistance

The coated plate was immersed in 40°C water for ten days. Thereafter, the condition of the coating was judged by the following two grades.
- good:: No change was observed.
- bad:: Blister was recognized.

### 4. Heat resistance

One gram of the graft polyolefin obtained in EXAMPLE 1 was fed in a test tube and melted in an oil bath heated at 150°C. A piece of Congo red test paper was held in the gas phase (over the melted polyolefin) in the test tube in order to see how long the test paper required to turn from red to blue. Likewise, the color change time of the test paper was measured with respect to the graft polyolefins obtained in EXAMPLES 2 to 5 and the resin (HARDLEN CY-9124P) in the resin coating composition of REFERENCE EXAMPLE 1.

Referring to Table 2, all samples from EXAMPLES 1 to 5 proved to be good in adhesion property, gasoline resistance, hot water resistance and heat resistance. Above all, the graft polyolefins obtained in EXAMPLES 1 to 5 were endowed with remarkable heat resistance, as evidenced by the fact that the Congo red test paper did not turn blue in the high temperature condition after such a long period as 60 minutes or longer. The superiority of heat resistance can be also recognized by the comparison with the result of the sample of REFERENCE EXAMPLE 1.

As described above, the graft polyolefin of the present invention was obtained by allowing the acid anhydride-modified amorphous polyolefin to react with the hydroxyl group-containing radical polymerizable monomer, and thereafter graft-polymerizing a radical polymerizable monomer to the acid anhydride-modified amorphous polyolefin. As apparent from the foregoing description, the resulting graft polyolefin shows a better solubility in an organic solvent, not only improving the solution stability of the resin coating composition containing this graft polyolefin, but also allowing the resin coating composition to increase the content of such graft polyolefin. Secondly, the graft polyolefin of the present invention exhibits a good adhesion property to a polypropylene substrate, so that the coating formed of the graft polyolefin-containing resin coating composition can show an improved adhesion property to a polyolefin substrate. Thirdly, the graft polyolefin of the present invention has advantageous compatibility with polar paints and the like. As a result, the coating formed of the graft polyolefin-containing resin coating composition can show an excellent adhesion property to a polar-paint coating formed thereon, and the resin coating composition can serve, when blended with a paint, as a one-coat paint. Lastly, the resin coating composition containing the graft polyolefin of the present invention can form a coating which also exhibits remarkable heat resistance, gasoline resistance and hot water resistance.

## Claims

1. A graft polyolefin which is obtained by a method comprising the steps of:
(a) dissolving or dispersing, in an organic solvent, an acid anhydride-modified amorphous polyolefin which comprises propylene and butene as polymerizable components, thereby preparing its solution or dispersion;
(b) adding a hydroxyl group-containing radical polymerizable monomer to the solution or dispersion, and allowing the acid anhydride-modified polyolefin to react with the hydroxyl group-containing radical polymerizable monomer; and
(c) effecting graft polymerization by adding at least one radical polymerizable monomer and a radical initiator.

2. The graft polyolefin according to claim 1, wherein the acid anhydride in the acid anhydride-modified polyolefin is maleic anhydride and/or itaconic anhydride.

3. The graft polyolefin according to claim 1,
wherein the acid anhydride-modified polyolefin comprises the acid anhydride in a proportion of 0.1 to 10% by weight.

4. The graft polyolefin according to claim 1, wherein the organic solvent is at least one member selected from the group consisting of aromatic hydrocarbons, alicyclic hydrocarbons, glycols and esters.

5. The graft polyolefin according to claim 1, wherein the solution or dispersion comprises the acid anhydride-modified polyolefin in a proportion of 10 to 60% by weight as a solid content.

6. The graft polyolefin according to claim 1, wherein, in the step (b) , the hydroxyl group-containing radical polymerizable monomer is added in a molar ratio of 0.5 to 2 relative to the acid anhydride in the acid anhydride-modified polyolefin.

7. The graft polyolefin according to claim 1, wherein the hydroxyl group-containing radical polymerizable monomer is at least one member selected from the group consisting of 2-hydroxyethyl (meth)acrylate and polypropylene glycol (meth)acrylate.

8. The graft polyolefin according to claim 1, wherein the step (b) further comprises the step of heating the solution or dispersion of the acid anhydride-modified polyolefin to 110°C or higher and keeping the temperature for not less than 30 minutes, before the addition of the hydroxyl group-containing radical polymerizable monomer.

9. The graft polyolefin according to claim 1, wherein the radical polymerizable monomer comprises 2-ethylhexyl (meth)acrylate in a proportion of 10 to 90% by weight.

10. The graft polyolefin according to claim 1, wherein the radical polymerizable monomer is added in a weight ratio of 15/85 to 85/15 relative to the acid anhydride-modified polyolefin.

11. The graft polyolefin according to claim 1, wherein the radical initiator is at least one member selected from the group consisting of organic peroxides and azo compounds.

12. The graft polyolefin according to claim 1, wherein the radical polymerizable monomer and the radical initiator are added dropwise.

13. A resin coating composition which comprises the graft polyolefin according to any of claims 1 to 12 in a proportion of 10 to 60% by weight as a solid content.

## Patentansprüche

1. Pfropfpolyolefin, das durch ein Verfahren erhalten wird, umfassend die Schritte von:
(a) Auflösen oder Dispergieren eines Säureanhydridmodifizierten amorphen Polyolefins, das Propylen und Buten als polymerisierbare Komponenten umfasst, in einem organischen Lösungsmittel, wodurch seine Lösung oder Dispersion_hergestellt wird;
(b) Zugeben eines Hydroxylgruppen enthaltenden, radikalisch polymerisierbaren Monomers zu der Lösung oder Dispersion und Umsetzenlassen des Säureanhydrid-modifizierten Polyolefins mit dem Hydroxylgruppen enthaltenden, radikalisch polymerisierbaren Monomer; und
(c) Bewirken von Pfropfpolymerisation durch Zugeben von mindestens einem radikalisch polymerisierbaren Monomer und einem radikalischen Starter.

2. Pfropfpolyolefin nach Anspruch 1, worin das Säureanhydrid in dem Säureanhydrid-modifizierten Polyolefin Maleinsäureanhydrid und/oder Itaconsäureanhydrid ist.

3. Pfropfpolyolefin nach Anspruch 1, worin das Säureanhydrid-modifizierte Polyolefin das Säureanhydrid in einem Anteil von 0,1 bis 10 Gewichtsprozent umfasst.

4. Pfropfpolyolefin nach Anspruch 1, worin das organische Lösungsmittel mindestens ein Mitglied ist, ausgewählt aus der Gruppe, bestehend aus aromatischen Kohlenwasserstoffen, alicyclischen Kohlenwasserstoffen, Glycolen und Estern.

5. Pfropfpolyolefin nach Anspruch 1, worin die Lösung oder Dispersion das Säureanhydrid-modifizierte Polyolefin in einem Anteil von 10 bis 60 Gewichtsprozent als Feststoffgehalt umfasst.

6. Pfropfpolyolefin nach Anspruch 1, worin in dem Schritt (b) das Hydroxylgruppen enthaltende, radikalisch polymerisierbare Monomer in einem Molverhältnis von 0,5 zu 2, bezogen auf das Säureanhydrid in dem Säureanhydrid-modifizierten Polyolefin, zugegeben wird.

7. Pfropfpolyolefin nach Anspruch 1, worin das Hydroxylgruppen enthaltende, radikalisch polymerisierbare Monomer mindestens ein Mitglied, ausgewählt aus der Gruppe, bestehend aus 2-Hydroxyethyl(meth)acrylat und Polypropylenglycol-(meth)acrylat, ist.

8. Pfropfpolyolefin nach Anspruch 1, worin der Schritt (b) vor der Zugabe des Hydroxylgruppen enthaltenden, radikalisch polymerisierbaren Monomers weiterhin den Schritt des Erhitzens der Lösung oder Dispersion des Säureanhydrid-modifizierten Polyolefins auf 110°C oder höher und Halten der Temperatur für nicht weniger als 30 Minuten umfasst.

9. Pfropfpolyolefin nach Anspruch 1, worin das radikalisch polymerisierbare Monomer 2-Ethylhexyl(meth)acrylat in einem Anteil von 10 bis 90 Gewichtsprozent umfasst.

10. Pfropfpolyolefin nach Anspruch 1, worin das radikalisch polymerisierbare Monomer in einem Gewichtsverhältnis von 15/85 bis 85/15, bezogen auf das Säureanhydrid-modifizierte Polyolefin, zugegeben wird.

11. Pfropfpolyolefin nach Anspruch 1, worin der radikalische Starter mindestens ein Mitglied, ausgewählt aus der Gruppe, bestehend aus organischen Peroxiden und Azoverbindungen, ist.

12. Pfropfpolyolefin nach Anspruch 1, worin das radikalisch polymerisierbare Monomer und der radikalische Starter tropfenweise zugegeben werden.

13. Harzbeschichtungszusammensetzung, die ein Pfropfpolyolefin nach einem der Ansprüche 1 bis 12 in einem Anteil von 10 bis 60 Gewichtsprozent als Feststoffgehalt umfasst.

## Revendications

1. Polyoléfine greffée, qui est obtenue par un procédé comprenant les étapes consistant à :
(a) dissoudre ou disperser, dans un solvant organique, une polyoléfine amorphe modifiée par un anhydride d'acide, qui comprend du propylène et du butène comme composants polymérisables, pour ainsi préparer sa solution ou dispersion ;
(b) ajouter un monomère polymérisable de manière radicalaire contenant un groupe hydroxyle, à la solution ou dispersion et laisser réagir la polyoléfine modifiée par un anhydride d'acide avec le monomère polymérisable de manière radicalaire contenant un groupe hydroxyle, et
(c) réaliser la polymérisation par greffage en additionnant au moins un monomère polymérisable de manière radicalaire et un initiateur radicalaire.

2. Polyoléfine greffée selon la revendication 1, où l'anhydride d'acide dans la polyoléfine modifiée par un anhydride d'acide est l'anhydride maléique et/ou l'anhydride itaconique.

3. Polyoléfine greffée selon la revendication 1, où la polyoléfine modifiée par un anhydride d'acide comprend l'anhydride d'acide en une proportion allant de 0,1 à 10% en poids.

4. Polyoléfine greffée selon la revendication 1, où le solvant organique est au moins un membre choisi parmi le groupe consistant en des hydrocarbures aromatiques, des hydrocarbures alicycliques, des glycols et des esters.

5. Polyoléfine greffée selon la revendication 1, où la solution ou dispersion comprend la polyoléfine modifiée par un anhydride d'acide en une proportion de 10 à 60% en poids, en tant que teneur en matières solides.

6. Polyoléfine greffée selon la revendication 1, où dans l'étape (b), le monomère polymérisable de manière radicalaire contenant un groupe hydroxyle, est ajouté en un rapport molaire allant de 0,5 à 2, par rapport à l'anhydride d'acide dans la polyoléfine modifiée par un anhydride d'acide.

7. Polyoléfine greffée selon la revendication 1, le monomère polymérisable de manière radicalaire contenant un groupe hydroxyle, est au moins un membre choisi parmi le groupe consistant en le (méth)acrlate de 2-hydroxyéthyle et le (méth)acrylate de polypropylèneglycol.

8. Polyoléfine greffée selon la revendication 1, où l'étape (b) comprend en outre, l'étape de chauffage de la solution ou dispersion de la polyoléfine modifiée par un anhydride d'acide jusqu'à 110°C ou plus et de maintien de la température pendant au moins 30 minutes, avant d'ajouter le monomère polymérisable de manière radicalaire contenant un radical hydroxyle.

9. Polyoléfine greffée selon la revendication 1, où le monomère polymérisable de manière radicalaire comprend le (méth)acrylate de 2-éthylhexyle en une proportion allant de 10 à 90% en poids.

10. Polyoléfine greffée selon la revendication 1, où le monomère polymérisable de manière radicalaire est ajouté en un rapport pondéral allant de 15/85 à 85/15 par rapport à la polyoléfine modifiée par un anhydride d'acide.

11. Polyoléfine greffée selon la revendication 1, où l'initiateur radicalaire est au moins un membre choisi parmi le groupe consistant en les peroxydes organiques et les composés azo.

12. Polyoléfine greffée selon la revendication 1, où le monomère polymérisable de manière radicalaire et l'initiateur radicalaire sont ajoutés goutte à goutte.

13. Composition de résine de revêtement, qui comprend la polyoléfine greffée selon l'une quelconque des revendications 1 à 12, en une proportion allant de 10 à 60% en poids, en tant que teneur en matières solides.
